# EUROPEAN PATENT APPLICATION

(11) **EP 2 905 270 A1**
(43) Date of publication of application: **12.08.2015**
(21) Application number: 15154396.4
(22) Date of filing: 09.02.2015
(51) Int. Cl.: C04B 28/02, C04B 20/04

(54) **IMPROVED CONCRETE COMPOSITION**

(30) Priority: 07.02.2014 TR 201401414
(71) Applicant: Istanbul Universitesi Rektorlugu, 34452 Istanbul (TR); Kilic, Alaettin, Istanbul (TR); Sertabipoglu, Zeynep, Istanbul (TR)
(72) Inventor: Kilic, Alaettin, Istanbul (TR); Sertabipoglu, Zeynep, Istanbul (TR)
(74) Representative: Mutlu, Aydin

(57) **Abstract**

The present invention relates to micronized concrete compositions comprising cement and volcanic pumice as a mineral additive for use in production of concrete. Strength Activity Index (SAI) of the concrete composition according to the present invention is increased by means of using pumice that is heat treated at a temperature in the range of 500-1200 °C, Pozzolanic Activity of which is also increased at the end of this treatment.

## Description

### Technical Field of the Invention

The present invention relates to a new concrete composition for use as a building material provided for increasing strength of the concrete and improving its features. The invention particularly relates to an improved concrete composition comprising mineral additives such as volcanic pumice. Additionally, the invention is related to a production process of a concrete composition having improved mechanical strength.

### Background of the Invention

Various compositions relating to concrete for use as a construction material are available in the prior art. The researchers have always focused on increasing the amount of concrete without making concessions from the strength of concrete by means of adding various minerals to the concrete composition in construction works which require high amount of concrete. The primary mineral additives which can be added to concrete (for example, Portland cement) in certain proportions used as a construction material may be fly ash, volcanic ash, volcanic pumice, silica fume and rice husk ash. For example, fly ash among these additives can be obtained from thermal power plant waste, whereas volcanic ash can be supplied directly because it is excessively available in nature. Silica fume on the other hand, which is one of the well-known additives can be obtained from the waste of ferrochrome plants, whereas rice husk ash can be recycled from the waste of rice processing plants. Volcanic pumice can be directly obtained from the nature similar to volcanic ash. Silica fume and rice husk ash have an impact of increasing the strength of concrete, whereas fly ash, volcanic ash and volcanic pumice have an impact of decreasing the strength of concrete while having pozzolanic features.

GB 1180550-A is a patent application disclosing a material similar to porcelain produced by mixing various components. It is also disclosed that this material can be used as a concrete additive. The natural pumice mentioned between said components is mixed with cement. The pumice disclosed in this document is not subjected to heat treatment.

The pumice subjected to heat treatment is used in WO 2011/063004-A patent application. However, the usage area of the pumice here is hydraulic fracturing operations for increasing the production capacity of oil and gas wells. A filling material which is produced for preventing closure of slots opened by the liquid sent to underground for evacuation of oil and gas is claimed.

It is known that volcanic pumice without heat treatment has been used as an additive material in concrete compositions available in prior art. However, physical strength of concrete is decreased by this method while increasing the volume of concrete.

The present invention offers to heat treated volcanic pumice for solving the problems of known concrete compositions and to add it to cement mixture after grinding. It is concluded by the experiments performed that the heat treated pumice does not cause a weakness in the strength of concrete used as a construction material, on the contrary it increases the strength of concrete.

### Detailed Description of the Invention

It is found that pozzolanic activity of volcanic pumice abundant in nature is increased by heat treating and mechanical grinding, and volcanic pumice has an impact of increasing the strength of concrete by replacing it with concrete. Grinded and heat treated volcanic pumice has a role of new mineral additive which can be added to cement in certain proportions used as a principle substance for producing concrete and provides advantage for improving concrete features.

Volcanic pumice is a volcanic rock that is formed as a result of acidic volcanic activities; whose pores are closed, has no crystal water therein, generally comprising a rhyolitic composition. It is white or oyster white, and its density changes in the range of 0,5-1gr/cm³. Its chemical composition is 60-75% SiO₂ and its other dominated minerals are Fe₂O₃, Al₂O₃, CaO, MgO, K₂O, and Na₂O.

Within the scope of the invention, "concrete composition" refers to dry powder compositions which comprise the cement mixed with the minerals mentioned in the present invention and have hydration reactions for composing concrete when contacting with water. In the scope of the invention, "mineral additives" refers to substances which are added to composition for improving the feature of the concrete during production or before moulding. Additive agents are classified as chemical and mineral additives according to their source. Clinker, fly ash, silica fume, rock flour, etc. are called as "Mineral Additive" which are deposited in silos in the form of powder like cement. Mineral additives have not binding properties alone unlike cement, however, when they are used together, they act like cement, therefore provide cement economy. Mineral additives are used in high strength concrete production.

In the scope of the invention, "Pozzolanic Material" refers to siliceous materials or siliceous and aluminous materials which have not binding properties alone, however, generate compositions having binding properties by reacting calcium hydroxide in finely milled form in humid environments.

In the scope of the invention, "Pozzolanic Activity (PI)" refers to mathematical definition obtained by comparison of compressive strengths of two different concrete compositions after 28 curing days, one composition is made by mixing only normal cement and sand, the other composition is made by mixing cement and sand, however 20% of cement is replaced with an additive substance.

In the scope of the invention, "Strength Activity Index (SAI)" refers to the percentage ratio of concrete strength with mineral additive to normal concrete strength.

The material used in the scope of the invention is volcanic pumice (VAP). Its composition is well known in the art and it comprises amorphous SiO₂ more than 60% (i.e. between 60-75%). Its other essential minerals are Al₂O₃ and Fe₂O₃.

Pumice material provided in the scope of the invention is heat treated before being added to concrete composition. The inventors analyzed the natural pumice (NVAP) and the heat treated pumice (VAPCEM) individually in order to determine the effect of heat treatment to Unconfined Compressive Strength (UCS), Pozzolanic Activity (PI) and Strength Activity Index (SAI) of concrete mortar. Natural pumice is only subjected to coarse crushing and grinding (d₅₀<10 µm) and is called normal pumice (NVAP). The use of pumice, which is only subjected to grinding, as a cement additive agent is evaluated by some researchers and it has been reported in prior art that this agent has Pozzolanic feature, however it decreases the concrete strength.

The inventors have found that in case that volcanic pumice is heat treated according to the method of the invention, its Pozzolanic Activity (PI) increases considerably and consequently its Strength Activity Index (SAI) increases unexpectedly. Said effect increases more in case it is subjected to shock cooling after heat treatment. Without wishing to be bound by a theory, it is thought that the reason of this technical surprising effect is that pumice has more surface area with changes in its amorphous structure and more hydroxide bond is provided. Shock cooling also increases the technical effect by preventing SiO₂ crystallization.

In this respect, the concrete composition according to the invention comprises volcanic pumice that is heat treated at 500 to 1200 °C along with cement. The temperature of heat treatment is preferably 550-650 °C and the most preferably about 600 °C. The cement used is preferably Portland cement.

The percentage ratio of heat treated volcanic pumice in the concrete composition is at least 5%, more preferably 10-50%, and the most preferably 15-25% (w/w).

The inventors have found that Strength Activity Index (SAI) increases surprisingly by micronization of volcanic pumice below 20 µm after heat treatment. Accordingly, the particle size in micronization process after heat treatment is d₁₀₀<20 µm and d₅₀<10 µm.

The invention also provides a process relating to preparation of concrete composition mentioned above. The process of the invention comprises the following steps;
- heat treating of volcanic pumice at a temperature ranging from 500 to 1200 °C,
- micronization of volcanic pumice after heat treatment, and
- mixing obtained micronized powder with cement.

As mentioned above, said process comprises a shock cooling step after heat treatment in preferable embodiments. Said shock cooling may be done at temperatures close to room temperature such as 25±5 °C.

In another aspect, the invention also comprises use of the composition in concrete production. Other aspects of the invention will be apparent in the light of description and the examples presented hereinbelow.

### Example

Natural volcanic pumice is provided, and firstly it was heat treated at about 600 °C) by changing its physical features followed by shock cooling by leaving the same to a temperature of 25±5 °C. Therefore, crystallization of SiO₂ was prevented. Thereafter, the pumice as a whole was reduced to particles below 20 microns, and its 50% is reduced to particles below 10 micron by subjecting it to coarse crushing and fine grinding in order to increase its surface area (Blain surface area) that can interfere with its Pozzolanic Activity, and thereby is provided the formation of a high surface area (15000 cm²/g). The obtained composition was called acidic pumice (VAPCEM).

Mortar concrete samples in accordance with standards were prepared by using natural pumice (NVAP) and heat treated pumice (VAPCEM) in order to determine the effect of strength and the change of Pozzolanic Activity. The mixture composition of the mortar concrete is given in Table 1.

**Table1. The mixture composition of the mortar concrete**

| Name of the mixture | Sand | Cement | NVAP | VAPCEM | Water |
|---|---|---|---|---|---|
| CM | 1350 | 450 | - | - | 225 |
| NVAP-20 | 1350 | 360 | 90 | - | 225 |
| VAPCEM-20 | 1350 | 360 | - | 90 | 225 |

Unconfined Compressive Strength (UCS) was determined by breaking concrete samples after 28 curing days for hardening of the samples. Pozzolanic Activity (PI) and Strength Activity Index (SAI) were calculated.

Unconfined Compressive Strength (UCS), Pozzolanic Index (PI) and Strength Activity Index (SAI) of natural mortar concrete (NVAP), heat treated mortar concrete (VAPCEM) and control mortar concrete (CR) after 28 curing days are given in Table 2. CM given in Table 2 is a control concrete which was prepared with ASTM Type 1-Normal Portland Cement (42,5 N/mm²) and Cen Standard Sand. NVAP is a mortar concrete prepared by replacing 20% of the cement with non-heat treated (normal) pumice which was grinded below 20 microns. VAPCEM is a mortar concrete prepared by replacing 20% of the cement with heat treated pumice at 600 °C which was grinded below 20 microns.

**Table 2. Mortar concrete Strength and Index values after 28 days**

| Name of the concrete | UCS (MPa) | PI | SAI (%) |
|---|---|---|---|
| CM | 43,5 | 1,0 | 100 |
| NVAP | 32 | 0,74 | 74 |
| VAPCEM | 48 | 1,10 | 110 |

Pozzolanic Activity (PI) of volcanic-acidic pumice (VAP) was increased by 50% after grinding such that its average particle size would be under 10 microns and heating over 600 °C. This crushed, grinded and heat treated additive agent provides Pozzolanic Activity Index (PI) higher than 1,0 and Strength Activity Index (SAI) more 100% by being added to cement in certain ratios. Therefore, it is highly suitable for use as a strength-enhancing mineral additive by replacing cement with this specially treated mineral.

## Claims

1. A concrete composition in the form of dry powder comprising cement with volcanic pumice **characterized in that** said volcanic pumice is heat treated at a temperature ranging from 500-1200 °C.

2. A concrete composition according to claim 1, wherein said volcanic pumice is subjected to shock cooling after heat treatment.

3. A concrete composition according to claim 2, wherein said shock cooling is applied at a temperature of 25±5 °C.

4. A concrete composition according to claim 1, wherein the temperature of heat treatment is 550-650 °C.

5. A concrete composition according to claim 1, wherein volcanic pumice ratio in concrete composition is at least 5% (w/w).

6. A concrete composition according to claim 5, wherein volcanic pumice ratio in concrete composition is 15-25% (w/w).

7. A concrete composition according to claim 1, wherein heat treated volcanic pumice is micronized.

8. A concrete composition according to claim 7, wherein the particle size of the heat treated volcanic pumice is d₁₀₀<20 µm and d₅₀<10 µm.

9. A process for preparing a concrete composition according to any of the preceding claims, wherein said process comprises the steps of;
heat treating of volcanic pumice at a temperature ranging from 500 to 1200 °C, micronization of volcanic pumice after heat treatment, and
mixing obtained micronized powder with cement.

10. A process according to claim 9, wherein said process further comprises the step of shock cooling of volcanic pumice after heat treatment.

11. A process according to claim 10, wherein said shock cooling is applied at a temperature of 25±5 °C.

12. A process according to claim 9, wherein the temperature of heat treatment is 550-650 °C.

13. A process according to claim 9, wherein the ratio of volcanic pumice in concrete composition is at least 5% (w/w).

14. A process according to claim 9, wherein the ratio of volcanic pumice in concrete composition is 15-25% (w/w).

15. A process according to claim 9, wherein the particle size of the volcanic pumice obtained in micronization process is d₁₀₀<20 µm and d₅₀<10 µm.
